(19) Europäisches Patentamt
European Patent Office
Office européen des brevets

(11) Veröffentlichungsnummer: **0 097 232**
**B1**

(12) # EUROPÄISCHE PATENTSCHRIFT

(45) Veröffentlichungstag der Patentschrift: **15.10.86**

(51) Int. Cl.⁴: **C 07 C 103/54**, C 09 B 44/02

(21) Anmeldenummer: **83104127.2**

(22) Anmeldetag: **27.04.83**

(54) **Verfahren zur Herstellung von 4-(Trialkylammonium)-acetoacetaryliden.**

(30) Priorität: **18.06.82 CH 3769/82**

(43) Veröffentlichungstag der Anmeldung: **04.01.84 Patentblatt 84/1**

(45) Bekanntmachung des Hinweises auf die Patenterteilung: **15.10.86 Patentblatt 86/42**

(84) Benannte Vertragsstaaten: **AT BE CH DE FR GB IT LI LU NL SE**

(56) Entgegenhaltungen: **FR-A-2 514 018**

(73) Patentinhaber: **LONZA AG, Gampel/Wallis (CH)**

(72) Erfinder: **Tenud, Leander, Dr., Balfrinstrasse 23, Visp (Wallis) (CH)**
Erfinder: **Jolidon, Synèse, Dr., Weingartenweg 4, Visp (Wallis) (CH)**

(74) Vertreter: **Weinhold, Peter, Dr., Patentanwälte Dr. V. Schmied- Kowarzik Dipl.- Ing. G. Dannenberg Dr. P. Weinhold Dr. D. Gudel Dipl.- Ing. S. Schubert Dr. P. Barz Siegfriedstrasse 8, D-8000 München 40 (DE)**

**EP 0 097 232 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

Die Erfindung betrifft ein Verfahren zur Herstellung von-4-(Trialkylammonium)-acetoacetaryliden der allgemeinen Formel

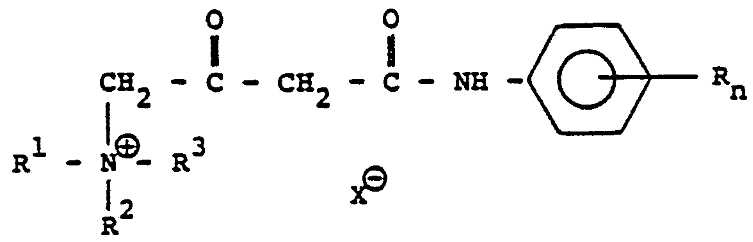

in der R = H, niedrig Alkyl, $-OCH_3$, $-OC_2H_5$, —Cl, —Br, $-NO_2$, $-NHCOCH_3$ und n = 1 bis 3 bedeuten und $R^1$, $R^2$ und $R^3$ Alkylreste mit 1 bis 18 C-Atomen und X = Cl oder Br bedeuten.

Unter dem Begriff "niedrig Alkyl" versteht man Alkylgruppen mit 1—6, vorzugsweise 1—4 Kohlenstoffatomen.

Pigmente lagern sich im Laufe des Herstellungsprozesses mehr oder weniger intensiv zu grösseren Agglomeraten zusammen. Beim Einarbeiten der Pigmente in das Ansendungsmedium müssen diese Zusammenlagerungen so weit wie möglich wieder in ihre Einzelbestandteile zerlegt — dispergiert — werden. Von dem Ausmass, mit dem dies gelingt, werden nahezu alle Eigenschaften, Haltbarkeiten und Echtheiten beeinflusst.

Um die Dispergierfähigkeit der Pigmente zu verbessern, werden den Pigmenten bereits bei der Herstellung Zusätze zugesetzt. Solche Hyper-Dispersants können z.B. für nichtpolare Systeme Polyhydroxystearinsäure-Verbindungen sein. Für polare Systeme werden u.a. Polymere und Copolymere, längerkettige Polyharnstoff-Verbindungen, Polysäureester oder quaternäre Ammoniumsulfate verwendet (Progress in Org. Coatings *5* (1977), 237—243).

Bei den Azoacetoacetarylamid-Pigmenten ist es bekannt, die Dispergierfähigkeit dadurch zu verbessern, dass man einen Teil des fertigen Pigments mit primären Aminen umsetzt. Dabei wird die Ketogruppe im Pigment mit dem Amin zu einer Schiff'schen Base umgesetzt (Progress in Org. Coatings, *5* (1977), 241). Dieses System ist mit dem Nachteil behaftet, dass es einerseits noch Spuren von nicht umgesetztem Amin enthält, andererseits kann die Dispergierfähigkeit dann wieder abnehmen (Ausflockungen), wenn durch Hydrolyse die Schiff'sche Base gespalten wird.

Zeil der vorliegenden Erfindung ist es, die Nachteile der bekannten Systeme auszuschalten.

Erfindungsgemäss wird dies dadurch erreicht, dass man die Acetoacetarylid-Kupplungskomponente als solche dispergierbar macht.

Die vorliegende Erfindung betrifft nun einer Verfahren zur Herstellung solcher 4-(Trialkylammonium)-acetoacetarylide der allgemeinen Formel

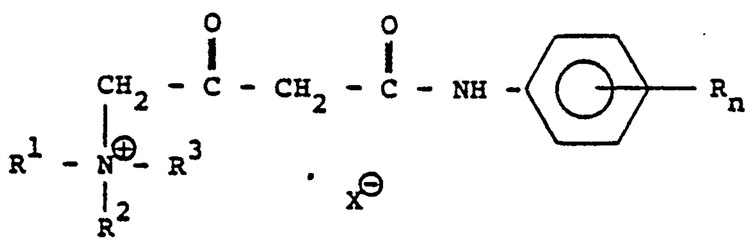

in der R = H, niedrig Alkyl, $-OCH_3$, $-OC_2H_5$, —Cl, —Br, $-NO_2$, $-NHCOCH_3$ und n = 1 bis 3 bedeuten und $R^1$, $R^2$ und $R^3$ Alkylreste mit 1 bis 18 C-Atomen und X = Cl oder Br bedeuten und ist dadurch gekennzeichnet, dass man entsprechende Trialkylamine mit den entsprechenden 4-Halogenacetessigsäurearyliden umsetzt.

Vorteilhafte Trialkylaminverbindungen sind solche, in welchen $R^1$ und $R^2$ gleich oder verschieden sind und niedere Alkylreste mit 1 bis 4 C-Atomen und $R^3$ eine höheren Alkylrest mit 6 bis 18 C-Atomen darstellen.

Solche Trialkylaminrest sind z.B. Dimethyl-hexyl-, Dimethyl-dodecyl-, Dimethyl-octadecylaminreste usw.

Als Acetessigsäurearylidreste kommen solche zur Anwendung, die als Kupplungskomponente bei den üblichen Pigmenten bekannt sind. Solche sind: Acetessigsäureanilid, -o-chloranilid, -o-anisidid, -o-toluidid, -m-xylidid, -p-anisidid, -p-toluidid, -p-phenetidid, -2-methyl-4-chloranilid, -2,4-dimethoxyanilid, -2,5-dimethoxyanilid, -2-methoxy-5-chloranilid, -2,5-dimethoxy-4-chloranilid, -p-nitroanilid, -3-chloranilid, -2-äthyl-6-methylanilid, -2,6-dimethylanilid usw.

Die Verbindungen werden erfindungsgemäß hergestellt durch Umsetzung der entsprechenden 4-Halogenacetessigarylide mit dem entsprechenden Trialkylamin bei niedrigen Temperaturen, zweckmäßig

bei Temperaturen von −10 bis +50°C, und in Gegenwart organischer Lösungsmittel. Vorzugsweise werden Temperaturen von 0 bis 30°C angewendet.

Es ist vorteilhaft, die Trialkylamine im Ueberschuss anzuwenden, zweckmässig werden pro Mol Arylid 1,1 bis 1,6 Mole Trialkylamin angewendet.

Als Lösungsmittel kommen, obwohl auch OH-gruppenhaltige organische Lösungsmittel wie Methanol und Aethanol anwendbar sind, zweckmässig OH-gruppenfreie Lösungsmittel zum Einsatz. Durch Arbeiten in OH-gruppenfreien Lösungsmitteln gestaltet sich die Isolierung der Endprodukte einfacher und die Ausbeuten liegen höher. Solche Lösungsmittel sind aromatische Kohlenwasserstoffe, wie z.B. Benzol, Toluol, chlorierte Kohlenwasserstoffe, wie z.B. Tetrachlorkohlenstoff, Di-, Tri- und Tetrachloräthan, Chlorbenzol, Dichlortoluol, Chloroform, Dichlormethan.

Als besonders zweckmässig, insbesondere, wenn es sich darum handelt, die bevorzugten Diniedrigalkyl-monohöheralkkylaminreste einzuführen, hat es sich erwiesen, als Lösungsmittel polare aprotische Lösungsmittel, wie Essigester, Acetonitril, Aceton, Dimethylformamid, Dimethylsulfoxid, Hexamethylphosphorsäuretriamid usw., zu verwenden.

Als 4-Halogenacetessigarylide kommen vorzugsweise die 4-Chlor- oder 4-Bromderivate zur Anwendung.

Die erfindungsgemäß hergestellten 4-(Trialkylammonium)-acetoacetarylidene können beispielsweise mit geeigneten Diazoniumverbindungen in an sich bekannter Weise zu so Azofarbstoffen umgesetzt werden.

Beispiel 1

Eine Mischung aus 8,45 g (40 mMol) 4-Chloracetessiganilid, 11,1 g (50 mMol) Dimethyldodecylamin und 85 ml Acetonitril wurde bei Raumtemperatur gerührt. Nach einigen Minuten entstand eine klare Lösung. Diese wurde für 3 Tage bei Raumtemperatur weitergerührt, wobei das Produkt mit der Zeit ausfiel. Das Reaktionsgemisch wurde auf 0°C gekühlt, der Niederschlag abgenutscht und das Produkt mit 10 ml eiskaltem Acetonitril gewaschen. Nach dem Trocknen im Trockenschrank bei Raumtemperatur erhielt man:

10,6 g (63,7%) leicht gelbliche Kristalle eines Gemisches aus 4-(Dimethyldodecylammonium)-acetoacetanilid-chlorid und seinem inneren Salz; Smp. 128 bis 131°C; Gehalt 99,9%.

Beispiel 2

Eine Mischung aus 8,45 g (40 mMol) 4-Chloracetessiganilid, 11,1 g (50 mMol) Dimethyldodecylamin und 60 ml Essigester wunden während 3 Tagen bei Raumtemperatur gerührt. Das Reaktionsgemisch wurde auf 5°C gekühlt, der Niederschlag abgenutscht und mit 10 ml eiskaltem Essigester gewaschen. Nach dem Trocknen erhielt man:

14,4 g (85%) leicht gelbliche Kristalle von 4-(Dimethyldodecylammonium)-acetoacetanilid-chlorid; Smp. 128 bis 132°C; Gehalt 100,3% (TBAH).

Beispiel 3

Eine Mischung aus 9,0 g (40 mMol) 4-Chloracetessigsäure-o-toluidid, 6,7 g (52 mMol) N,N-Dimethylhexylamin und 85 nl Essigester wurden während 3 Tagen bei Raumtemperatur gerührt. Das Rekationsgemisch wurde auf 5°C gekühlt, der Niederschlag abgenutscht und mit 10 ml eiskaltem Essigester gewaschen. Nach dem Trocknen erhielt man:

10,3 g (73%) leicht gelbliche Kristalle von 4-(Dimethylhexylammonium)-acetoacet-o-toluidid; Smp. 158 bis 165°C; Gehalt 99,4%.

Beispiel 4

Eine Mischung von 9,75 g (40 mMol) 4-Bromacetessigsäureanilid, 11,1 g (50 mMol) Dimethyldodecylamin und 85 ml Acetonitril wurden bei Raumtemperatur gerührt. Nach wenigen Minuten entstand eine klare Lösung, aus der nach einiger Zeit das Produkt auskristallisierte. Nach 3 Stunden Stehenlassen bei Raumtemperatur wurde der Kristallbrei abgenutscht und mit 10 ml eiskaltem Acetonitril nachgewaschen. Nach dem Trocknen bei Raumtemperatur im Trockenschrank erhielt man:

14,5 g (79,3%) gelbliche Kristalle von 4-(Dimethyldodecylammonium)-acetessigsäureanilidbromid; Smp. 130 bis 132°C; Gehalt 99,4%.

Beispiel 5

63,5 g (0,3 Mol) 4-Chloracetessiganilid wurden in 140 ml Acetonitril aufgeschlämmt und mit 80 g (0,4 Mol) Trimethylamin versetzt. Das Gemisch wurde unter Rühren 6 Stunden bei 50°C gehalten. Die klare gelbliche Suspension wurde anschliessend am Rotationsverdampfer eingedampft und der Rückstand mit 190 ml Aceton aufgeschlämmt. Nach Zugabe von 450 ml Toluol wurde auf 5°C gekühlt, das Produkt abgenutscht, zweimal mit 50 ml Aceton gewaschen und getrocknet.

Man isolierte schliesslich 66,6 g Rohprodukt (Smp. 144 bis 146°C). Dieses wurde durch Umkristallisation aus Acetonitril/Essigester gereinigt und ergab:

49,3 g (61%) farblose Kristalle von 4-(Trimethylammonium)acetoacetanilid-chlorid; Smp. 160 bis 162°C; Gehalt 98,6%.

Beispiel 6

Eine Mischung aus 4,0 g (15,5 mMol) 4-Chloracetessig-p-nitroanilid, 6,60 g) (31 mMol) Dimethyldodecylamin und 100 ml Essigester wurde für 2 Tage bei Raumtemperatur gerührt. Das vorerst klare Reaktionsgemisch trübte sich bereits nach wenigen Stunden und das Produkt kristallisierte mit der Zeit aus. Das Reaktionsgemisch wurde auf 5°C gekühlt, der Niederschlag abgenutscht und mit 20 ml kaltem Essigester nachgewaschen. Nach dem Trocknen erhielt man 3,2 g (44%) gelbe Kristalle von 4-(Dimethyldodecyl-ammonium)-acetoacet-p-nitroanilid-chlorid, Smp. 149 bis 152°C; Gehalt 99,8%.

Beispiel 7

Eine Mischung aus 5,0 g (20 mMol) 4-Chloracetessig-p-phenetidin, 10,2 g (50 mMol) Dimethyldodecylamin und 100 ml Essigester wurde für 10 Tage bei Raumtemperatur gerührt. Das Reaktionsgemisch wurde auf 5°C gekühlt, der Niederschlag abgenutscht und mit 20 ml kaltem Essigester nachgewaschen.

Nach dem Trocknen erhielt man 6,05 g (64%) farblose Kristalle von 4-(Dimethyldodecyl-ammonium)-acetoacet-p-phenetidid-chlorid. Smp. 168 bis 170°C; Gehalt 98,8%.

Beispiel 8

Eine Mischung aus 8,45 g (40 mMol) 4-Chloracetessiganilid, 15,5 g (52 mMol) Dimethyloctadecylamin und 85 ml Toluol wurde für 3 Tage bei Raumtemperatur gerührt. Das Reaktionsgemisch wurde auf 5°C gekühlt, der Niederschlag abgenutscht und mit 10 ml eiskaltem Essigester gewaschen und getrocknet.

Man isolierte 17,9 g Rohprodukt (Smp. 110 bis 118°C). Dieses wurde durch Umkristallisation aus Essigester gereinigt und man erhielt schliesslich:

11,2 g (55%) leicht gelbliche Kristalle von 4-(Dimethyloctadecyl-ammonium)-acetoacetanilid-chlorid; Smp. 137 bis 138°C; Gehalt 99,6%.

**Patentansprüche**

1. Verfahren zur Herstellung von 4-(Trialkylammonium)-acetoacetaryliden der allgemeinen Formel

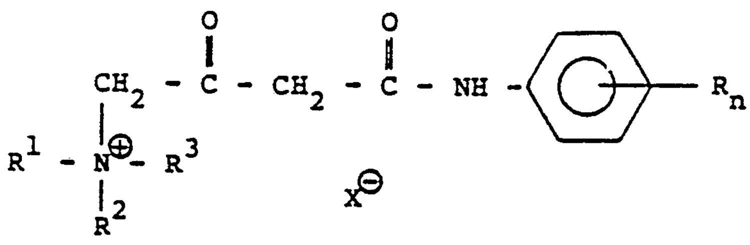

in der R = H, niedrig Alkyl, $-OCH_3$, $-OC_2H_5$, $-Cl$, $-Br$, $-NO_2$, $-NHCOCH_3$ und n = 1 bis 3 bedeuten und $R^1$, $R^2$ und $R^3$ Alkylreste mit 1 bis 18 C-Atomen und X = Cl oder Br bedeuten, dadurch gekennzeichnet, dass man die entsprechenden Trialkylamine mit den entsprechenden 4-Halogenacetessigaryliden bei niedrigen Temperaturen und in Gegenwart organischer Lösungsmittel umsetzt.

2. Verfahren nach Patentanspruch 1, dadurch gekennzeichnet, dass man als Lösungsmittel aprotische Lösungsmittel verwendet.

3. Verfahren nach Patentanspruch 1, dadurch gekennzeichnet, dass man als Lösungsmittel polare aprotische Lösungsmittel verwendet.

4. Verfahren nach Patentansprüchen 1 bis 3, dadurch gekennzeichnet, dass man bei Temperaturen von −10 bis +50°C arbeitet.

5. Verfahren nach Patentansprüchen 1 bis 4, dadurch gekennzeichnet, dass man mit einem Ueberschuss von Trialkylaminen arbeitet.

6. Verfahren nach Patentansprüchen 1 bis 5, dadurch gekennzeichnet, dass man als 4-Halogenacetoacetarylide die 4-Chlor- oder 4-Bromderivate verwendet.

7. Verfahren gemäß Patentansprüchen 1 bis 6, dadurch gekennzeichnet, daß man zur Herstellung von 4-Dimethyldodecylammoniumacetoacetoanilidchlorid 4-Chloracetessiganilid mit der 1,1- bis 1,6-fachen äquivalenten Menge Dimethyldodecylamin in einem polaren aprotischen Lösungsmittel bei Temperaturen von 0 bis 30°C umsetzt und das gewünschte Produkt isoliert.

**Revendications**

1. Procédé de préparation de 4-(trialkylammonium)acétoacétarylides de formule générale

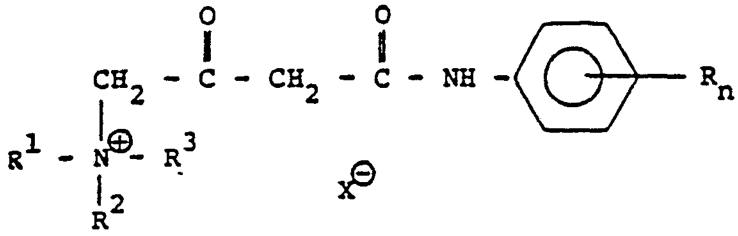

dans laquelle R = H, alkyle inférieur, $—OCH_3$, $—OC_2H_5$, —Cl, —Br, $—NO_2$, $—NHCOCH_3$ et n = 1 à 3, et $R^1$, $R^2$ et $R^3$ représentent des radicaux alkyle avec 1 à 18 atomes de carbone, et X = Cl ou Br, caractérisé en ce qu'on fait réagir les trialkylamines correspondantes avec les 4-halogénacétoacétarylides appropriés à basses températures et en présence de solvants organiques.

2. Procédé suivant la revendication 1, caractérisé en ce qu'on utilise comme solvants des solvants aprotiques.

3. Procédé suivant la revendication 1, caractérisé en ce qu'on utilise comme solvants des solvants polaires aprotiques.

4. Procédé suivant les revendications 1 à 3, caractérisé en ce qu'on opère à des températures de −10 à +50°C.

5. Procédé suivant les revendications 1 à 4, caractérisé en ce qu'on opère avec un excès de trialkylamines.

6. Procédé suivant les revendicatons 1 à 5, caractérisé en ce qu'on utilise comme 4-halogénoacéto acétarylides les dérivés 4-chloro ou 4-brono.

7. Procédé suivant les revendications 1 à 6, caractérisé en ce que pour la préparation du chlorure de 4-diméthyldodécylammonium-acétoacétanilide, on fait réagir le 4-chloracétoacétanilide avec 1,1 à 1,6 fois la quantité équivalente de diméthyldodécylamine dans un solvant polaire aprotique à des températures de 0 à 30°C et en ce qu'on isole le produit souhaité.

**Claims**

1. Process for the production of 4-(trialkyl-ammonium)-aceto-acetarylides of the general formula

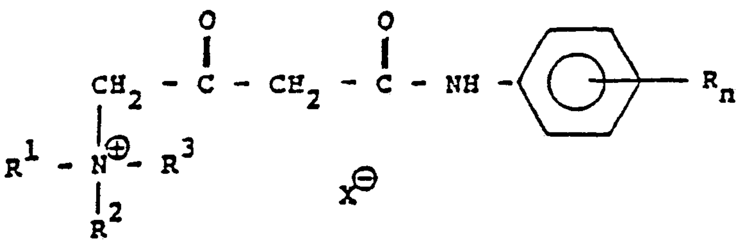

in which R = H, lower alkyl, $—OCH_3$, $—OC_2H_5$, —Cl, —Br, $—NO_2$, $—NHCONH_3$, and n = 1 to 3, and $R^1$, $R^2$ and $R^3$ are alkyl radicals having 1 to 18 carbon atoms, and X = Cl or Br; characterized in that the corresponding trialkylamines are reacted with the corresponding 4-halo-acetoacetarylides at low temperatures and in the presence of organic solvents.

2. Process according to patent claim 1, characterized in that as solvents aprotic solvents are used.

3. Process according to patent claim 1, characterized in that as solvents polar aprotic solvents are used.

4. Process according to patent claims 1 to 3, characterized in that one operates at temperatures of −10 to +50°C.

5. Process according to patent claims 1 to 4, characterized in that one operates with an excess of trialkylamines.

6. Process according to patent claims 1 to 5, characterized in that as 4-halo-acetoacetarylides the 4-chloro or 4-bromo derivatives are used.

7. Process according to patent claims 1 to 6, characterized in that for the production of 4-dimethyl-dodecyl-ammonium-acetoacetanilide chloride 4-chloroacetoacetanilide is reacted with the 1.1 to 1.6 fold equivalent amount of dimethyl dodecylamine in a polar aprotic solvent at temperatures of 0 to 30°C and the desired product is isolated.